## Europäisches Patentamt

## European Patent Office

## Office européen des brevets

(11) Publication number: **0 190 942**
**A2**

## (12) EUROPEAN PATENT APPLICATION

(21) Application number: 86300847.0

(22) Date of filing: 07.02.86

(51) Int. Cl.⁴: **H 04 N 5/91**

(30) Priority: 07.02.85 JP 22210/85
07.02.85 JP 22211/85
07.02.85 JP 22212/85
15.03.85 JP 52646/85

(43) Date of publication of application:
13.08.86 Bulletin 86/33

(84) Designated Contracting States:
DE FR GB

(71) Applicant: Matsushita Electric Industrial Co., Ltd.
1006, Oaza Kadoma
Kadoma-shi Osaka-fu, 571(JP)

(72) Inventor: Yoneyama, Masayuki
Syoei-ryo 30-23, Miyukihigashimachi
Neyagawa-shi Osaka-fu 572(JP)

(72) Inventor: Kobayashi, Masaaki
1-224, Nishitadahigashitouge
Kawanishi-shi Hyogo-ken, 661-01(JP)

(74) Representative: Crawford, Andrew Birkby et al,
A.A. THORNTON & CO. Northumberland House 303-306
High Holborn
London WC1V 7LE(GB)

(54) Signal processing apparatus.

(57) A signal processing circuit for processing an input signal by first and second transmission circuits (11, 13) in positive and inverse time series respectively. The first and second transmission circuits have a same transfer function. The apparatus includes first and second memories (15, 16) and first and second switches (14, 17). The first and second memories are selectively connected via the first switch (14) to the first transmission circuit (11) output and via the second switch (17) to the second transmission circuit (13) input. Each memory repeats write and read operations alternately in such a manner that an output signal of the first transmission circuit (11) is written for a predetermined period and the written signal is read for the subsequent predetermined period in a time series inverse to that for writing and sent to the second transmission circuit (13). While one of the first and second memories (15, 16) is conducting write operation, the other is conducting read operation. The first and second switches and first and second memories are controlled by a control signal generated by a control circuit (18), which signal reverses its state with intervals of the predetermined period.

./...

FIG. 2

FIRST MEMORY 15

R/W   ADDRESS

10   11   14   19   17   13   20

FIRST
TRANSMISSION
CIRCUIT

INPUT

a

b

ADDRESS
GENERATING
CIRCUIT

Oa

Ob

SECOND
TRANSMISSION
CIRCUIT

OUTPUT

16

R/W   ADDRESS

SECOND MEMORY

18

CONTROL
CIRCUIT

TIME SERIES INVERTING CIRCUIT

Signal Processing Apparatus

The present invention relates to a signal processing apparatus for processing signals before or after frequency modulation in video equipment.

New video media such as home video tape recorders (VTR), video discs, optical fiber cable and broadcasting satellites have been progressed in recent years. With this trend, higher picture quality and greater definition are increasingly required in video equipment, for making better use of the features of these new media. VTR's, which record and reproduce video signals, conventionally employ frequency modulation/demodulation-based recording. When white noise is present in FM transmission lines, noises applied to demodulated signals have the so-called triangle noise characteristic, in which noise level increases with frequency. To reduce this noise level, levels of the intermediate and high frequency areas of the input video signal are emphasized prior to frequency modulation (emphasis) so as to increase frequency deviation, and de-emphasized after frequency demodulation (de-emphasis).

However, since the frequency band in FM transmission lines is restricted by electromagnetic transformation, increase in frequency deviation by the emphasis is limited. Accordingly, the signal-to-noise (S/N) ratio of the reproduced signal is restricted. This restriction, which is common to all frequency modulation-based video signal transmission systems, including VTR's and satellite communication systems, is one of the problems to be solved for attaining high quality and greater definition. In a VHS system VTR, for example, the 600KHz or higher frequency band level is emphasized five times relative to the 120KHz or lower frequency band. In addition, signals are cut by clipping at 160% in the "white" direction and at -40% in the "black" direction (distance from the peak level of the synchronizing signal to 100% white level is taken as 100%), in consideration of the frequency band of the electromagnetic transformation system. As a result, the signals obtained after the de-emphasis are degraded compared with the original signals.

Accordingly, an object of the present invention is to provide a signal processing apparatus which permits higher emphasis than that of the prior art, with the same frequency deviation as that of the prior art.

Another object of the invention is to provide a signal processing apparatus in which the peak of the signal waveform obtained via the same emphasis as that of the prior art is substantially smaller than that of the prior art.

Still another object of the present invention is to provide a signal processing apparatus which contains an arbitrary transfer function with preshoots and overshoots.

A further object of the present invention is to provide a signal processing apparatus which is capable of compensating phase characteristic of transmission systems and attaining zero phase shift of processed signals in real time.

According to the present invention, a signal processed in a first transmission circuit is written into a memory for a predetermined period of time and read from the memory for the subsequent predetermined period of time in a time series inverse from that for writing. The resultant signal in the inverse time series is then processed in a second transmission circuit having the same transfer function as that of the first transmission circuit. The thus processed signal contains preshoots and overshoots in its waveform. For a television signal, it is written into the memory for a period "nH" (n: positive integer; H: horizontal synchronization period) starting at a time "α" (arbitrary positive natural number) from the leading edge of a horizontal synchronizing signal. The time "α" is preferably located at the center of a horizontal synchronizing signal. To obtain flat frequency characteristic after emphasis or de-emphasis, bilinear z transformation is preferably used to design an emphasis or a de-emphasis circuit for analog-to-digital conversion. Furthermore, the two memories used to achieve the inverse real time series signal processing can be accessed by a common address to simplify the configuration.

BRIEF DESCRIPTION OF THE DRAWINGS

Fig. 1 is a block diagram of a signal processing system, for explaining the principle of the present invention;

Fig. 2 is a block diagram showing an embodiment of signal processing apparatus of the invention;

Fig. 3 shows signal waveforms explaining operation of the embodiment of Fig. 2;

Fig. 4 is a block diagram showing a detailed construction of the embodiment of Fig. 2; and -

Fig. 5 shows signal waveforms for explaining operation of the embodiment of Fig. 4.

DESCRIPTION OF THE PREFERRED EMBODIMENTS

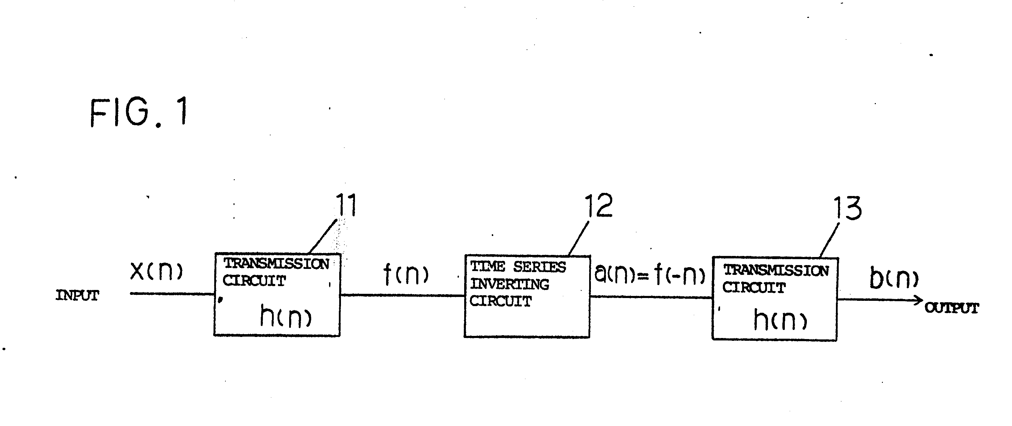

The principle of the present invention will now be described with reference to Fig. 1. An input signal $x(n)$ is processed by a first transmission circuit 11 having a unit impulse response $h(n)$ to be a signal $f(n)$. The time series of the signal $f(n)$ is inverted by a time series inverting circuit 12 to be a signal $a(n) = f(-n)$. The signal $a(n)$ is processed by a second transmission circuit 13 having the unit impulse response $h(n)$ to be an output signal $b(n)$.

Assuming that z transformations of signals x(n), f(n), a(n) and b(n) are X(z), F(z), A(z) and B(z), respectively, and that z transformation of h(n) is H(z), the following equations are established:

$$F(z) = H(z) \cdot X(z)$$

$$A(z) = F(z^{-1}) = H(z^{-1}) \cdot X(z^{-1})$$

$$B(z) = H(z) \cdot A(z) = H(z) \cdot H(z^{-1}) \cdot X(z^{-1})$$

Accordingly, z transformation of the equivalent unit impulse response for the entire system of Fig. 1, $Heq(z^{-1})$, becomes as follows:

$$Heq(z^{-1}) = B(z)/X(z^{-1}) = H(z^{-1}) \cdot H(z)$$

The output signal of the system of Fig. 1 has a time series inverse to that of the input signal. To obtain an output signal of the same time series as that of the input signal, another time series inverting circuit (not shown) may be connected to the output terminal of the system of Fig. 1.

Using a Fourier transformation, the equivalent impulse response of the system of Fig. 1 is expressed as follows:

$$Heq(e^{j\omega}) = |H(e^{j\omega})|^2$$

Phase shift is therefore zero. To effect a gain "G" for the entire system, the gain of each of the transmission circuits must be "$G^{1/2}$".

When an emphasis or a de-emphasis is to be performed by using the system of Fig. 1, it is desirable to use a bylinear z transformation to determine transfer function.
A transfer function E(z) for emphasis is, for example,
obtained by using the following formula:

$$E(z) = C \frac{1 - az^{-1}}{1 - bz^{-1}} \qquad (a, b, c = \text{coefficients})$$

A transfer function D(z) for de-emphasis with respect to the
emphasis is obtained by using the following formula:

$$D(z) = \frac{1}{C} \frac{1 - bz^{-1}}{1 - az^{-1}}$$

Accordingly, by the bilinear z transformation, the product
of E(z) and D(z) is precisely "1", so that the frequency
characteristic after the emphasis and de-emphasis becomes
flat.

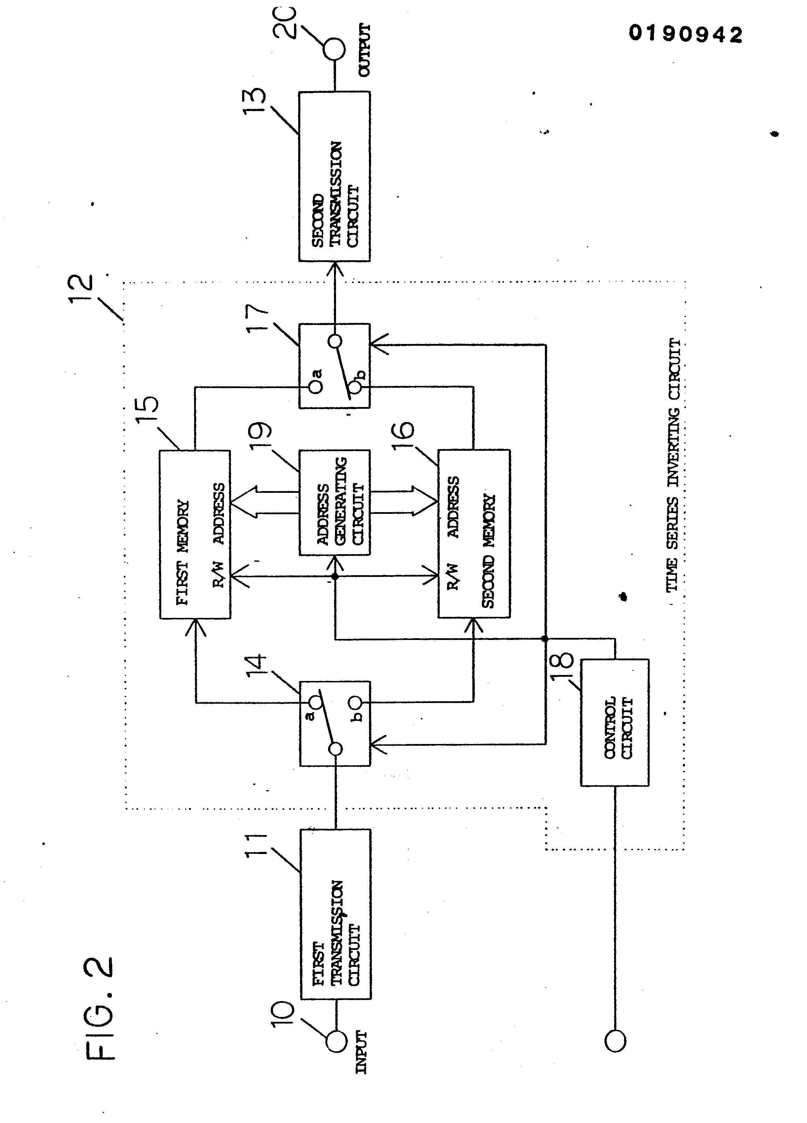

An embodiment of the present invention will be described
below in a case for processing television signals. Fig. 2
is a block diagram of an embodiment of a signal processing
apparatus of the present invention. First and second
transmission circuits 11 and 13 have a same transfer function.
When the apparatus is constructed as a phase linear emphasis
apparatus, any well-known emphasis circuits may be used as
the first and second transmission circuits 11 and 13.

First and second memories 15 and 16 are of the First-
In-Last-Out type. Output signal of the first transmission
circuit 11 is written into one of the memories 15 and 16
for a nH period (n: positive integer; H: one horizontal synchronization period). This stored signal is then read out from the memory for the following nH period in a time series inverse to that for writing, and sent to the second transmission circuit 13. That is, the time axis of the signal is reversed. The first and second memories 15 and 16 complementarily repeat the write and read operations alternately with the period of nH. Specifically, when a first switch 14 makes contact with a terminal "a" connected to the first memory 15 and a second switch 17 with a terminal "b" connected to the second memory 16, the first memory 15 conducts the write operation while the second memory 16 conducts the read operation. In contrast, when the first switch 14 makes contact with a terminal "b" connected to the second memory 16 and the second switch 17 with a terminal "a" connected to the first memory 15, the first memory 15 conducts the read operation while the second memory 16 conducts the write operation. Addresses for access to the first and the second memories 15 and 16 are generated by an address generating circuit 19.

The operation described above is achieved by alternately designating the read and write operations for each of the first and second memories 15 and 16 and alternately changing over the contact terminals a, b of the first and second switches 14 and 17 by using a control signal which reverses its state with intervals of nH. This control signal is generated by a control circuit 18 from a horizontal synchronizing signal contained in a television signal. The control signal reverses at an arbitrary time "α" past the leading edge but between the leading and trailing edges of a horizontal synchronizing signal. Preferably, this reversing time is selected at the center of the duration of the horizontal synchronizing signal.

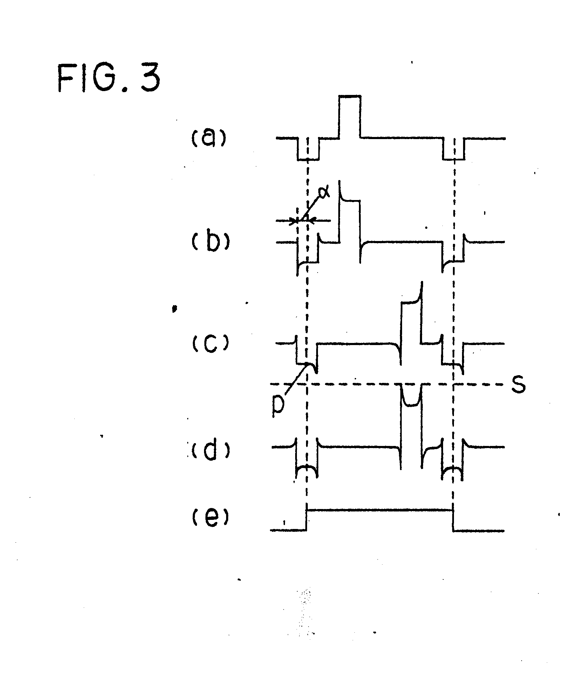

Fig. 3 shows signal waveforms at main points of the embodiment of Fig. 2 on the assumption of n = 1. In Fig. 3, (a) is a video signal inputted to an input terminal 10. The signal (a) is emphasized in the first transmission circuit 11 to be a signal indicated by (b). The time axis of signal (b) is inverted in the first or second memory 15 or 16 to be a signal indicated by (c) which is outputted via the second switch 17. In this embodiment, the time axis reversing time "α" is selected at the center point P of the horizontal synchronizing signal. At point P, signal (c) becomes continuous. The signal (c) is further emphasized in the second transmission circuit 13 to be a signal indicated by (d). Since the center point P is further from both edges (leading and trailing edges) of the horizontal synchronizing signal, it is negligibly subjected to waveform change due to the emphasis processing. Accordingly, the signal (d) is outputted from an output terminal 20 without undesired changes. Signal (e) is the control signal.

In the signal processing apparatus of the present invention, as described above, a signal passes through the first transmission circuit in a positive time series and then through a second transmission circuit having the same transfer function as that of the first transmission circuit in an inverted (negative) time series, so that the apparatus has zero phase characteristic. If the apparatus of the present invention is used as an emphasis circuit in a frequency modulation system, preshoots and overshoots are provided in the signal waveform so that the signal will not be degraded even if clipped at the same level as the prior art (for example, at level S in signal (d) of Fig. 3). Furthermore, if the clipped amount is the same, greater emphasis can be attained compared with the prior art, thereby increasing S/N ratio.

The signal processing apparatus of the present invention may contain three or more memories rather than two. The same effect as described above can be expected from such a modification. Analog memories (for instance, charge transfer devices such as charge-coupled devices) may be used for the first and second memories 15 and 16. Alternatively, the first and second memories 15 and 16 may be digital memories each with an A/D converter connected to the input terminal and a D/A converter connected to the output terminal of each. Further, the signal processing apparatus of the invention may be configured such that an A/D converter is incorporated before the input terminal of the first transmission circuit 11, digital memories are used as the first and second memories 15 and 16, digital filters are used as the first and second transmission circuits 11 and 13, and a D/A converter is incorporated after the second transmission circuit 13. Alternatively, the configuration may be such that an A/D converter is incorporated before the input terminal 10, digital memories are used as the first and second memories 15 and 16, non-recursive or recursive digital filters are used as the first and second transmission circuits 11 and 13, and a D/A converter is incorporated after the output terminal 19.

The control circuit 18 for generating the control signal from the horizontal synchronizing signal can be easily realized using well-known circuit technology. The horizontal synchronizing signal may be supplied from outside the signal processing apparatus or extracted from either the input terminal 10, the output of the first transmission circuit 11 or the input or output of the second transmission circuit 13.

In the above embodiment, in which the input signal is the video signal, the time axis reverses with a period based on the horizontal synchronization period "H". But, the reversing period may be set at other predetermined values according to the kind of the input signal.  In the above
embodiment, the invention is applied to an emphasis apparatus,
but it is of course also applicable to other apparatuses
such as for providing preshoots and overshoots to the input
signal.

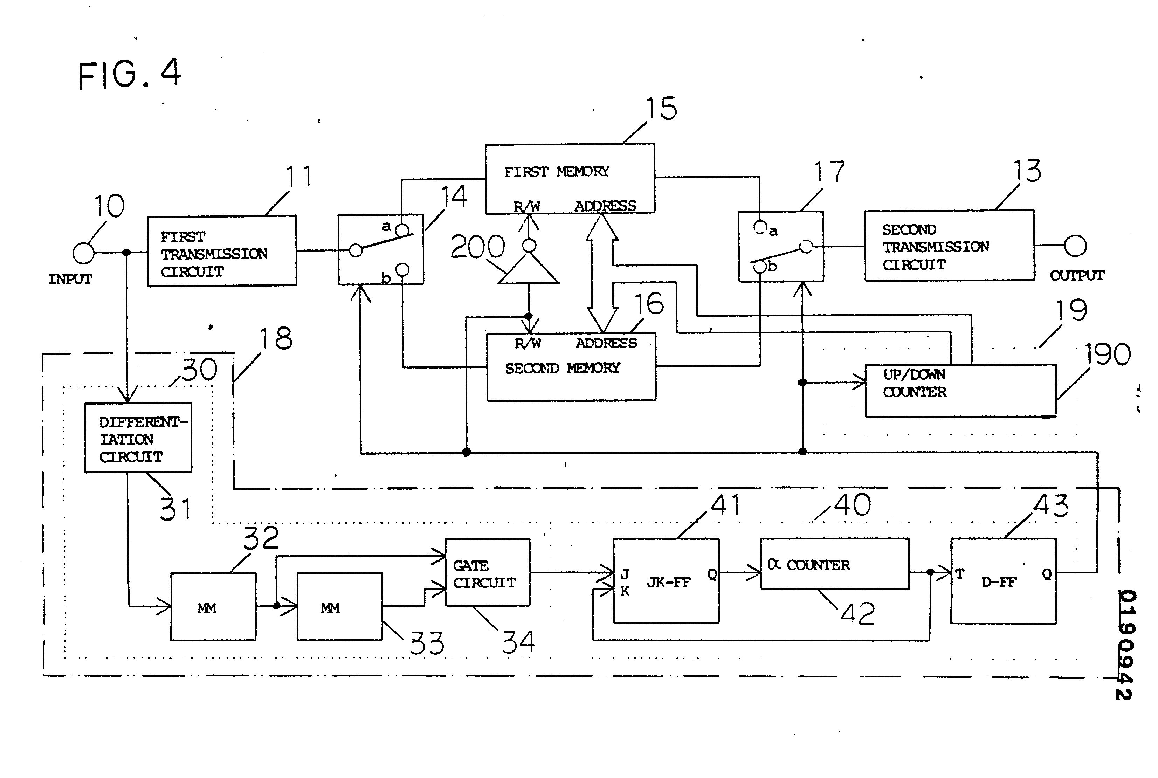

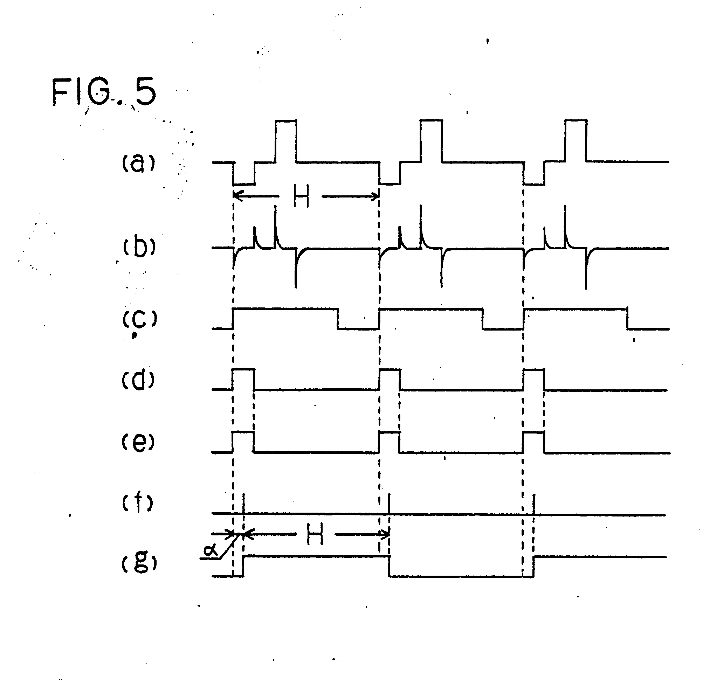

Fig. 4 is a block diagram showing specific constructions
of the control circuit 18 and the address generating circuit
19 of the embodiment of Fig. 2.  Fig. 5 shows signal wave-
forms of the embodiment of Fig. 4.  Referring to Fig. 4,
the control circuit 18 comprises a horizontal synchronizing
signal detecting circuit 30 and a control signal generating
circuit 40.  The address generating circuit 19 comprises an
up-down counter 190.

The horizontal synchronizing signal generating circuit
30 comprises a differentiation circuit 31, monostable
multivibrators  (MMs) 32 and 33  and a gate circuit 34.
The differentiation circuit 31 detects the edges of a
horizontal synchronizing signal contained in an input video
signal (indicated by (a) in Fig. 5), and generates a signal
indicated by (b) in Fig. 5.  The MM 32 is triggered by a
horizontal synchronizing signal leading edge detecting
pulse in signal (b) to generate a signal indicated by (c)
in Fig. 5.  The pulse width of signal (c) should be shorter
than 1H but long enough to eliminate an equivalent pulse
(normally found at the center point of a horizontal synchronizing signal) in the vertical flyback period. The MM 33
is triggered by the leading edge of the output signal (c)
of the MM 32 and generates a signal having almost the same
pulse width as the horizontal synchronizing signal, as shown
by (d) in Fig. 5. By respectively passing output signals
(c) and (d) of the MM 32 and MM 33 through the gate circuit
34, a signal equivalent to the horizontal synchronizing
signal as shown by (e) in Fig. 5 is obtained. Obviously,
signal (c) does not contain the abovementioned equivalent
pulse. A synchronizing signal level detector may be used
in place of the differentiation circuit 31.

The control signal generating circuit 40 comprises a
JK-flip-flop (JK-FF) 44, an $\alpha$ counter 42 and a D-flip-flop
(D-FF) 43. The JK-FF 41 is "set" by the output (e) of the
horizontal synchronizing signal detecting circuit 30.
When the JK-FF 41 is set, the $\alpha$ counter 42 starts counting
and generates a pulse signal indicated by (f) in Fig. 5
after a time "$\alpha$". The JK-FF 41 is then "reset" by the pulse
signal (f). The D-FF 43 reverses its state every time it
receives a pulse signal (f) from the $\alpha$ counter to generate
a control signal which reverses with intervals of "H" as
shown by (g) in Fig. 5. Thus, the first and second switches
14 and 17 changeover their contact terminals between terminals
"a" and "b" in accordance with the control signal (g). The
control signal (g) is directly inputted to the second memory

- 13 -

16 at a read/write designation (R/W) terminal while it is inputted to a R/W terminal of the first memory 15 via an inverter 200; first and second memories 15 and 16 thus complementarily conduct the write and read operations alternately.

The up/down counter 190 counts up when the control signal (g) is at "HIGH" level and counts down when the control signal (g) is at "LOW" level. The count value is supplied as common address data to the first and second memories 15 and 16. When the up/down counter 190 counts up, the output signal of the first transmission circuit 11 is written through the first switch 14 into the first memory 15, while the signal previously stored in the second memory 16 is inversely read from the second memory 16 and sent through the second switch 17 to the second transmission circuit 13. In contrast, when the up/down counter 190 counts down, the signal stored in the first memory 16 is inversely read from the first memory 15 and sent through the switch 17 to the second transmission circuit 13, while the output signal of the first transmission circuit 13 is written through the first switch 14 into the second memory 16. In this way the first and second memories 15 and 16 share the same address, thus simplifying circuit construction.

In the embodiment of Fig. 4, the time axis inverting period is H(n = 1). If the horizontal synchronizing signal

- 14 -

0190942

detecting circuit 30 incorporates a counter, the time axis
can be inverted at any desired period ("nH").

CLAIMS:

1.    A signal processing apparatus comprising:
first transmission means (11) having a predetermined transfer function;
first and second memory means (15,16) selectively connectable to an output of said first transmission means via first switch means (14);
second transmission means (13) having said predetermined transfer function and selectively connectable to outputs of said first and second memory means (15,16) via second switch means (17); and
control means (18) for generating a control signal which reverse its states with intervals of a predetermined time period to control said first and second switch means (14,17) and said first and second memory means (15,16),
wherein each of said first and second memory means (15,16) conducts write and read operations alternately at said predetermined time period in such a manner at said predetermined time period in such a manner than an output signal of said first transmission means (11) is written via said first switch means (14) into one of said first and second memory means for said predetermined time period and read from said one of said first and second memory means (15,16) in an inverse time series to that for writing for the following said predetermined time period and sent via said second switch means (17) to said second transmission means (13), so that one of said first and second memory means conducts write operation while the other conducts read operation, thereby effecting continuous time axis inversion.

2.    Apparatus according to claim 1, wherein the control means (18) for generating a control signal is arranged to reverse its states with intervals of a time period "nH" (n: positive integer ; H: one horizontal synchronisation period) to control said first and second switch means (14,17) and said first and second memory means
(15,16), and

wherein each said first and second memory means
conducts write and read operations alternately at said
time period "nH" in such a manner that an output signal
of said first transmission means is written through
said first switch means into one of said first and
second memory means for said "nH" period and read from
said one of said first and second memory means in a time
series inverse to that for writing for the following
"nH" period and sent through said second switch means
to said second transmission means, so that one of said
first and second memory means conducts write operation
while the other conducts read operation, thereby effecting
continuous time axis inversion.

3.    Apparatus according to claim 2, wherein said control
means (18) comprises a horizontal synchronising signal
detecting circuit (30) for detecting a horizontal
synchronising signal contained in a video signal, and a
control signal generating circuit (40) for generating
a control signal in response to an output signal of said
horizontal synchronising signal detecting circuit.

4.    Apparatus according to claim 2 or 3, wherein the
control means (18) generates a control signal which
reverse its states with intervals of a time period "nH"
(n: positive integer; H: one horizontal synchronisation
period) and at any arbitrary point in a horizontal
synchronising signal of a video signal to control said
first and second switch means and said first and second
memory means.

5.     Apparatus according to any one of the preceding claims, further comprising address generating means (19) responsive to said control signal for generating an address signal which is supplied to said first and second memory means.

6.     Apparatus according to any one of the preceding claims, wherein said control signal reverses its state at a center point of a horizontal synchronising signal.

7.     Apparatus according to any one of the preceding claims wherein said transfer function of each of said first and second transmission means is a bilinear z transformation.

# FIG. 1

INPUT $x(n)$ → [TRANSMISSION CIRCUIT $h(n)$ — 11] → $f(n)$ → [TIME SERIES INVERTING CIRCUIT — 12] → $a(n) = f(-n)$ → [TRANSMISSION CIRCUIT $h(n)$ — 13] → $b(n)$ → OUTPUT

0190942

# FIG. 2

FIRST MEMORY

R/W   ADDRESS

FIRST
TRANSMISSION
CIRCUIT

INPUT

ADDRESS
GENERATING
CIRCUIT

SECOND
TRANSMISSION
CIRCUIT

OUTPUT

R/W   ADDRESS

SECOND MEMORY

CONTROL
CIRCUIT

TIME SERIES INVERTING CIRCUIT

0190942

FIG. 3

(a)

(b)

α

(c)

p                                           S

(d)

(e)

# FIG. 4

INPUT

10

FIRST TRANSMISSION CIRCUIT — 11

14

a
b

FIRST MEMORY — 15

R/W   ADDRESS

200

17

a
b

SECOND TRANSMISSION CIRCUIT — 13

OUTPUT

18

30

DIFFERENT-IATION CIRCUIT

31

R/W   ADDRESS — 16

SECOND MEMORY

UP/DOWN COUNTER — 19

190

32

MM

MM

33

GATE CIRCUIT

34

41

J
K    JK-FF    Q

40

α COUNTER

42

43

T    D-FF    Q

0190942

FIG. 5